# EUROPEAN PATENT SPECIFICATION

(11) **EP 4 172 257 B1**
(45) Date of publication and mention of the grant of the patent: **13.08.2025**
(21) Application number: 21734170.0
(22) Date of filing: 29.06.2021
(51) Int. Cl.: C08K 3/16, C08K 7/14, C08K 3/30, C08K 3/22, C08L 23/10, B29B 7/00, B29B 7/72, B29B 7/90, B29B 9/14, H01Q 1/42, H01Q 1/44, C08K 3/26, B29C 45/00, B29K 21/00, B29K 23/00, B29B 9/06

(54) **LIGHT COLOR POLYPROPYLENE BASED COMPOSITION**
HELLFARBIGE ZUSAMMENSETZUNG AUF BASIS VON POLYPROPYLEN
COMPOSITION À BASE DE POLYPROPYLÈNE DE COULEUR CLAIRE

(30) Priority: 29.06.2020 WO PCT/CN2020/098851; 28.09.2020 EP 20198828
(43) Date of publication of application: 03.05.2023
(73) Proprietor: SABIC Global Technologies B.V., 4612 PX Bergen op Zoom (NL)
(72) Inventor: GUO, Jing, 6160 GA Geleen (NL); DONNERS, Rob, 6160 GA Geleen (NL); SHI, Xiaomei, 6160 GA Geleen (NL); JIANG, Chaodong, 6160 GA Geleen (NL); GREIN, Christelle, Marie, Helene, 6160 GA Geleen (NL); WEN, Liang, 6160 GA Geleen (NL)
(74) Representative: Sabic Intellectual Property Group
(86) International application number: PCT/EP2021/067768
(87) International publication number: WO 2022/002888

(56) References cited:
- EP-B1- 1 852 938
- WO-A1-2009/016745
- WO-A1-2010/089241
- WO-A1-2020/064752

## Description

The present invention relates to a polymer composition comprising a polypropylene and glass fiber. The present invention further relates to a process for the preparation of said polymer composition and to an article comprising the said polymer composition, the present invention further relates to the use of the polymer composition in an article.

Polymer compositions comprising polypropylene and glass fiber are known in the art. Depending on the application, color pigments may be used in the polymer composition. To achieve a light color, a pigment with a pure color is often compounded with a white pigment. For instance, to achieve a light blue color, a pure blue pigment can be compounded with a white pigment. Typically, white pigments leads to a substantial degradation of the impact performance, especially the low temperature impact resistance of the polymer composition.

Antenna housings are used in antenna stations to provide protection on antennas from the environment. Therefore, it is desirable that the antenna housings are made of polymer compositions with sufficient stiffness and a high low temperature impact resistance to withstand extreme weathers, e.g. gales or hail. Another common requirement on the polymer compositions to be used in antenna housing is light color for an aesthetic reason - as antennas are often installed in high places, a light color better matches the color of the sky. Antenna housings based polymer compositions comprising polypropylene are known in the art, for instance:
EP 1852938 B1 discloses an antenna housing comprising an electromagnetic window portion through which electromagnetic signals are passed in use, wherein a layer of a wall of the electromagnetic window is formed from self reinforced polypropylene.

US 20170190884 A1 discloses a resin composition for a radar cover. The resin composition includes carbon nanotubes and a polymer resin. The resin composition does not interfere with the transmission of signals from a radar while protecting the radar from the surroundings.

White or light color of the polymer composition can be achieved by adding white color pigment in the polymer composition, but this often leads to an inferior impact performance, yet there is still a need to provide a polymer composition with a white or light color and superior preservation of impact resistance.

This need is satisfied in the present invention by a polymer composition comprising polypropylene, glass fiber and a pigment comprising an inorganic zinc salt and an inorganic barium salt; wherein the MFI of the polypropylene is in the range from 17 to 75 dg/min, as measured according to ISO1133 at 230°C/2.16kg, wherein the xylene soluble part of the polypropylene is in the range from 9.3 to 19.6 wt% as measured according to by ISO16152:2005, wherein the amount of the polypropylene is in the range from 29.6 to 79.8 wt% based on the total amount of the polymer composition, wherein the amount of the glass fiber is in the range from 17 to 34 wt% based on the total amount of the polymer composition.

The inventors of the present invention surprisingly found that the composition according to the invention has a white or light color and superior preservation of impact resistance.

In the context of the present invention, "white or light color" is meant that the L value of the polymer composition is at least 79 wherein L value is measured according to ISO 11664-4:2008; In the context of the present invention, with "superior preservation of impact resistance" is meant that the ratio between the impact resistance of a composition comprising 4 wt% white pigment and a composition wherein the 4 wt% white pigment is substituted by 4 wt% of the polypropylene according to the invention is at least 0.70, wherein the impact resistance is measured according to ISO180:2000 at 23°C.

Preferably, the invention relates to a polymer composition comprising polypropylene, glass fiber, a pigment comprising an inorganic zinc salt and an inorganic barium salt, and a polyolefin based elastomer, wherein the MFI of the polypropylene is in the range from 17 to 75 dg/min, as measured according to ISO1133 at 230°C/2.16kg, wherein the xylene soluble part of the polypropylene is in the range from 9.3 to 19.6 wt% as measured according to by ISO16152:2005, wherein the amount of the polypropylene is in the range from 29.6 to 79.8 wt% based on the total amount of the polymer composition, wherein the amount of the glass fiber is in the range from 17 to 34 wt% based on the total amount of the polymer composition, wherein the density of the polyolefin based elastomer is in the range from 0.853 to 0.860 g/cm3 as measured according to ASTM D792-13, wherein the MFI of the polyolefin based elastomer is in the range from 0.8 to 14.2 dg/min as measured according to ASTM D1238-13,190°C, 2.16kg. Such polymer composition may have a superior low temperature falling weight impact resistance.

### Polypropylene

The polypropylene according to the invention is preferably a heterophasic propylene copolymer, wherein the heterophasic propylene copolymer may be prepared in one or more reactors, by polymerization of propylene in the presence of a catalyst and optionally subsequent polymerization of an ethylene-α-olefin mixture.

The polypropylene according to present invention can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the polypropylene is made using Ziegler-Natta catalyst.

Preferably the polypropylene according to the invention consists of a propylene-based matrix and a dispersed ethylene-α-olefin copolymer.

Preferably the amount of the propylene-based matrix is from 60 to 99wt%, for example from 65 to 95 wt%, for example from 70 to 90wt%, for example from 75 to 85wt%, for example from 80 to 85wt% based on the total amount of the polypropylene.

Preferably the amount of the dispersed ethylene-α-olefin copolymer is from 40 to 1 wt%, for example from 35 to 5 wt%, for example from 30 to 10 wt%, for example from 25 to 15 wt%, based on the total amount of the polypropylene.

The total amount of the propylene-based matrix and the dispersed ethylene-α-olefin copolymer is preferably 100 wt%. The amountt ratio between the propylene-based matrix and the dispersed ethylene-α-olefin copolymer is preferably in the range from 95:5 to 65:35, preferably from 90:10 to 70:30, preferably from 85:15 to 75:25.

The amounts of the propylene-based matrix and the dispersed ethylene-α-olefin copolymer may be determined by NMR, as well known in the art.

The propylene-based matrix may consists of a propylene homopolymer and/or a propylene- α-olefin copolymer consisting of at least 70 wt% of propylene and up to 30 wt% of ethylene and/or an α-olefin having 4 to 10 carbon atoms, for example a propylene- α-olefin copolymer consisting of at least 80 wt% of propylene and up to 20 wt% of ethylene and/or an α-olefin having 4 to 10 carbon atoms, for example consisting of at least 90 wt% of propylene and up to 10 wt% of ethylene and/or an α-olefin having 4 to 10 carbon atoms, based on the total amount of the propylene-based matrix.

The α-olefin in the propylene- α-olefin copolymer may be selected from the group ethylene and α-olefins having 4-10 carbon atoms, for example 1-butene, 1-pentene, 4-methyl-1-pentene, 1-hexen, 1-heptene, 1-octene and mixtures thereof, preferably the α-olefin in the propylene- α-olefin copolymer is ethylene.

Preferably, the propylene-based matrix is a propylene homopolymer.

Preferably the melt flow index (MFI) of the propylene-based matrix MFI_{PP} is at least 30 dg/min and at most 120 dg/min, measured according to ISO1133 (2.16 kg/230°C). MFI_{PP} may be for example at least 40 dg/min, at least 45 dg/min, at least 50 dg/min, at least 55 dg/min or at least 60 dg/min, and/or for example at most 110 dg/min, at most 100 dg/min, at most 90 dg/min or at most 80 dg/min, measured according to ISO1133 (2.16 kg/230°C).

The propylene-based matrix is preferably semi-crystalline, that is it is not 100% amorphous, nor is it 100% crystalline. For example, the propylene-based matrix is at least 40% crystalline, for example at least 50%, for example at least 60% crystalline and/or for example at most 80% crystalline, for example at most 70% crystalline. For example, the propylene-based matrix has a crystallinity of 60 to 70%. For purpose of the invention, the degree of crystallinity of the propylene-based matrix is measured using differential scanning calorimetry (DSC) according to ISO11357-1 and ISO11357-3 of 1997, using a scan rate of 10°C/min, a sample of 5mg and the second heating curve using as a theoretical standard for a 100% crystalline material 207.1 J/g.

The MFI of the dispersed ethylene-α-olefin copolymer ( MFI_{EPR}) may be for example at least 0.001 dg/min, at least 0.01 dg/min, at least 0.1 dg/min, at least 0.3 dg/min, at least 0.7 dg/min, at least 1 dg/min, and/or for example at most 30 dg/min, at most 20 dg/min, at most 15 dg/min, at most 10 dg/min, at most 5 dg/min, at most 3 dg/min as measured according to ISO1133 (2.16 kg/230°C).

The amount of ethylene in the ethylene-α-olefin copolymer is preferably in the range from 20 to 80wt% based on the ethylene-α-olefin copolymer, more preferably, the amount of ethylene in the ethylene-α-olefin copolymer is from 30 to 70 wt%, more preferably from 40 to 65 wt%, more preferably from 50 to 65 wt%, even more preferably from 55 to 65wt%.

Preferably, the α-olefin in the ethylene-α-olefin copolymer is propylene.

The MFI of the polypropylene is in the range from 17 to 75 dg/min, preferably in the range from 20 to 60 dg/min, more preferably in the range from 25 to 55 dg/min, even more preferably in the range from 28 to 40 dg/min as measured according to ISO1133 (2.16 kg/230°C).

The xylene soluble part of the polypropylene according to the invention is in the range from 9.3 to 19.6 wt%, preferably in the range from 11.2 to 18.4 wt%, more preferably in the range from 12.4 to 17.4 wt% as measured according to by ISO16152:2005. The intrinsic viscosity of the xylene soluble part of the polypropylene is preferably in the range from 1.2 to 4.6 dl/g, preferably in the range from 1.8 to 4.0 dl/g, even more preferably in the range from 2.3 to 3.5 dl/g as measured according to ISO1628-1:2009 in decalin at 135 °C.

The amount of the polypropylene is in the range from 29.6 to 79.8 wt%, preferably from 47.1 to 77.2 wt% based on the total amount of the polymer composition

### Glass fibers

In general, glass fiber is a glassy cylindrical substance where its length is significantly longer than the diameter of its cross section. It is known that adding glass fibers is able to improve the mechanical performance (e.g. strength and stiffness) of polymeric resin. The level of performance improvement depends heavily on the properties of the glass fibers, e.g. diameter, length and surface property of the glass fiber.

For the purpose of the present invention, the diameter of the glass fibers is preferably in the range from 5 to 50 microns, preferable from 10 to 30 microns, more preferable from 15 to 25 microns.

It is also know that long glass fiber (length from 0.5 to 50 mm) is able to provide superior property improvement than short glass fiber (length shorter than 0.5 mm) to the composition. The length of glass fibers in the present invention depends heavily on the process used to prepare the said composition. Preferably the glass fiber in the polymer composition according to the invention are long glass fibers.

In the present invention, the amount of glass fibers is from 17 to 34 wt%, more preferably from 26 to 32 wt% based on the total amount of the polymer composition.

The total amount of the polypropylene and glass fiber is preferably at least 81 wt%, more preferably at least 87 wt%, more preferably at least 91 wt% based on the total amount of the polymer composition

### Pigment

The pigment comprises, preferably consists of an inorganic zinc salt and an inorganic barium salt. Preferably the pigment is a white pigment. A pigment is able to change the color of reflected or transmitted light as the result of wavelength-selective absorption. A pigment is a finely-divided solid which is essentially insoluble in its polymeric application medium. Pigments are incorporated by a dispersion process into the plastic while it is in a molten phase and, after the plastic solidifies, the dispersed pigment particles are retained physically within the solid polymer matrix.

In the present invention, "salt" is defined as "A chemical compound consisting of an assembly of cations and anions" (P1329, IUPAC. Compendium of Chemical Terminology, 2nd ed. Compiled by A. D. McNaught and A. Wilkinson. Blackwell Scientific Publications, Oxford (1997). Online version (2019-). ISBN 0-9678550-9-8.). Following this definition, a metal salt can be considered as a metal compound, e.g. an inorganic zinc salt is an inorganic zinc compound, an inorganic barium salt is an inorganic barium compound.

The molar ratio between the inorganic zinc salt and the inorganic barium salt is preferably in the range from 0.3 to 1.7, more preferably in the range from 0.5 to 1.5, even more preferably in the range from 0.8 to 1.2.

The total amount of the inorganic zinc salt and the inorganic barium salt is preferably in the range from 1.3 to 6.2 wt%, more preferably in the range from 1.8 to 5.4 wt%, even more preferably in the range from 2.3 to 4.8 wt% based on the total amount of the polymer composition.

The inorganic zinc salt according to the invention is selected from a group consisting of zinc sulfide, zinc oxide and a mixture thereof, preferably the inorganic zinc salt is zinc sulfide.

The inorganic barium salt according to the invention is selected from a group consisting of barium carbonate, barium sulfate, barium chloride and a mixture thereof, preferably the inorganic barium salt is barium sulfate.

Preferably the inorganic zinc salt according to the invention is zinc sulfide and the inorganic barium salt according to the invention is barium sulfate.

### Polyolefin based elastomer

The polymer composition in the present invention preferably further comprises a polyolefin based elastomer.

The polyolefin based elastomer is preferably selected from a group consisting of ethylene-1-butene copolymer, ethylene-1-hexene copolymer, ethylene-1-octene copolymer and mixtures thereof, more preferably wherein the elastomer is selected from ethylene-1-octene copolymer. Most preferably, the elastomer is an ethylene-1-octene copolymer.

Preferably the density of the polyolefin based elastomer is preferably in the range from 0.845 to 0.883 g/cm3, preferably in the range from 0.848 to 0.865 g/cm3, more preferably in the range from 0.853 to 0.860 g/cm3 as measured according to ASTM D792-13.

Preferably the MFI of the polyolefin based elastomer is in the range from 0.5 to 18.0, preferably in the range from 0.8 to 14.2 dg/min as measured according to ASTM D1238-13,190°C, 2.16kg.

The shore A hardness of the polyolefin based elastomer is preferably in the range from 35 to 90, preferably in the range from 42 to 69, more preferably in the range from 47 to 60 as measured according to ASTM D2240-15, 1s.

The inventors of the present invention surprisingly found that the polymer composition according to the invention comprising a polyolefin based elastomer having an MFI in the range from 0.8 to 14.2 dg/min as measured according to ASTM D1238-13,190°C, 2.16kg and a density in the range from 0.853 to 0.860 g/cm3 as measured according to ASTM D792-13 has an excellent falling weight impact resistance at -40°C.

Elastomers which are suitable for use in the current invention are commercially available for example under the trademark EXACT^{™} available from Exxon Chemical Company of Houston, Texas or under the trademark ENGAGE^{™} polymers, a line of metallocene catalyzed plastomers available from Dow Chemical Company of Midland, Michigan or under the trademark TAFMER^{™} available from MITSUI Chemicals Group of Minato Tokyo or under the trademark Fortify^{™} and Cohere^{™} from SABIC.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the amount of ethylene incorporated into the polyolefin based elastomer is at least 45 wt%. More preferably, the amount of ethylene incorporated into the polyolefin based elastomer is at least 48 wt%, for example at least 50 wt%. The amount of ethylene incorporated into the polyolefin based elastomer may typically be at most 95 wt%, for example at most 85 wt%, for example at most 75 wt%, for example at most 65 wt%, for example at most 60 wt%, for example at most 58 wt%.

The amount of the polyolefin based elastomer is preferably in the range from 5 to 20 wt%, more preferably in the range from 7 to 15 wt% based on the total amount of the polymer composition.

### Optional additives

The thermoplastic polymer composition may further contain the usual additives, for instance nucleating agents and clarifiers, stabilizers, release agents, fillers, peroxides, plasticizers, antioxidants, lubricants, antistatics, cross linking agents, scratch resistance agents, high performance fillers, impact modifiers, flame retardants, blowing agents, acid scavengers, recycling additives, coupling agents, anti-microbials, anti-fogging additives, slip additives, antiblocking additives, polymer processing aids and the like. Such additives are well known in the art. The skilled person will know how to choose the type and amount of additives such that they do not detrimentally influence the aimed properties.

Pigments other than the inorganic zinc salt and the inorganic barium salt may be added to the polymer composition, however such pigments should not deteriorate the white or light color and the impact performance of the polymer composition, wherein composition preferably does not contain a pigment that deteriorates the L value of the polymer composition to a value lower than 70, preferably the composition does not contain a pigment that deteriorates the L value of the polymer composition to a value lower than 74, more preferably the composition does not contain a pigment that deteriorates the L value of the polymer composition to a value lower than 79 wherein L value is measured according to ISO 11664-4:2008, wherein the composition preferably does not contain a pigment that deteriorates the preservation of impact resistance of the polymer composition to a value lower than 0.62, preferably the composition does not contain a pigment that deteriorates the preservation of impact resistance of the polymer composition to a value lower than 0.67, more preferably the composition does not contain a pigment that deteriorates the preservation of impact resistance of the polymer composition to a value lower than 0.70 wherein the impact resistance is measured according to ISO180:2000 at 23°C wherein the reservation of impact resistance is calculated as the ratio between the impact resistance at of a composition comprising 4 wt% pigment and a composition wherein the 4 wt% pigment is substituted by 4 wt% of PP, wherein the impact resistance is measured according to ISO180:2000 at 23°C.

The present invention further relates to a process for the preparation of the polymer composition.

The polymer composition according to the invention can be prepared by a process known in the art for the preparation of a fiber reinforced composition, for instance: a pultrusion process, a wire-coating process as described in EP 0921919 B1 and EP 0994978 B1, or compounding. The polymer composition prepared in such process is in pellet form.

The present invention further relates to an article comprising the polymer composition according to the invention, wherein the article comprises preferably at least 90 wt%, preferably at least 95 wt%, more preferably at least 97 wt% of the polymer composition according to the invention based on the total amount of the article. Preferably the article is an antenna housing.

The present invention further relates to a process for the preparation of the article comprising the following sequential steps:
- Providing the polymer composition according to the invention in pellet form.
- Injection molding the polymer composition into an article.

The present invention further relates to the use of the polymer composition according to the invention in an article, preferably the article is an antenna housing.

### Examples:

### Materials used:

### Polypropylene (PP):

Polypropylene (PP) used for the preparation of samples is commercially available from SABIC. The PP has an MFI of 30 dg/min as measured according to ISO1133 at 230°C/2.16kg. The PP has an xylene soluble part of 16.4 wt% as measured according to ISO16152:2005, the intrinsic viscosity of the xylene soluble part is 3 dl/g as measured according to ISO1628-1:2009 in decalin at 135 °C.

### Glass fibers (GF):

The glass fibres used were standard Type 30 roving SE4220, supplied by 3B as a roving package, have filament diameter of 19 microns and contain aminosilane-containing sizing composition.

### Pigments:

The pigments used in the examples include titanic dioxide TiO₂ (KRONOS^{®} 2233), zinc sulfide ZnS (SACHTOLITH HD from Sachtleben Chemie GmbH), and lithopone ZnS^{·} BaSO₄ (B311 from Union Titanium Enterprise (Shanghai)co.,limited).

### Polyolefin based elastomer:

Several grades of ethylene-octene copolymer commercially available from SABIC under the trade mark Fortify were used. Their characteristics are summarized in Table 1:

**Table 1 Properties of POEs**

| POE code | Grade name | Shore A hardness (ASTM D2240-15, 1s) | Density (g/cm3, ASTM D792-13) | Melt flow index (dg/min, ASTM D1238-13,190°C, 2.16kg) |
|---|---|---|---|---|
| POE 1 | C1070 | 71 | 0.868 | 1.0 |
| POE 2 | C13060 | 63 | 0.863 | 13 |
| POE 3 | C1055D | 55 | 0.857 | 1.0 |

### Additives and impregnating agent:

The additives used in the examples consists of 1 wt% of compatibilizer and 0.4 wt% of stabilizer. The impregnating agent used in the examples is the same as the one used in WO2009/080281A1, the amount of the impregnating agent is 1.75 wt%. The amounts of additives and the impregnating agent are based on the total amount of the composition.

### Process:

Specimens are prepared in the following sequential steps:
In a first step, PP was melt-mixed with POE, white pigment and additives to prepare a thermoplastic resin in pellet form.

In a second step, polymer compositions were prepared by wire-coating process as described in the examples of WO2009/080281 A1 using the thermoplastic resin obtained in the first step, glass fibers and impregnating agent. The compositional detail of the polymer compositions is given in Table 2.

In a third step, the pellets of the polymer compositions were injection molded into plaques. The dimensions of the plaques are suitable for the measurements.

### Measurement methods:

### Color measurement:

The color (L.a.b) of specimens with different pigments is tested according to ISO/CIE 11664-4:2019. L value of the specimens are shown in Table 2.

### Stiffness:

The stiffness was determined by measuring the flexural modulus according to ISO178:2010.

### Impact resistance:

Impact resistance of the examples was measured by two methods: Izod test and falling weight test.
- Izod measurements were carried out according to ISO180:2000 at 23°C and -40°C. Preservation of impact resistance is calculated as the ratio between the impact resistance at of a composition comprising 4 wt% pigment and a composition wherein the 4 wt% pigment is substituted by 4 wt% of PP, wherein the impact resistance is measured according to ISO180:2000 at 23°C and -40°C.
- Falling weight test was carried out according to the following protocol:
   Plaques used in this measurement are with dimensions: 150*150*3 mm.

The falling weight impact test was performed on a customized machine. The customized machine comprises two parts: A weight release mechanism and a plaque support.

The weight release mechanism is able to release a metallic ball with 511 gram weight and 50 mm diameter from 1.3 m height with 0 initial velocity as a free falling object to create falling weight impact on the test plaque.

The plaque support has a square shape with one space in the centre, the outside dimension of the support is 150*150 mm and inside dimension of the dimension is 130*130 mm. The horizontal geometric centre of the outer square superposes with that of the inner square. A plaque was placed horizontally on the plaque support, the horizontal geometric centre of the plaque superposed with that of the support.

The weight release mechanism and the plaque support are positioned in a way that the falling weight impact is created perpendicularly on the plaque surface. The horizontal geometric centre of the plaque superposes with that of the impact point.

The plaque was conditioned in a freezer at -40 °C for at least 4 hours before installation on the plaque support. The whole falling impact operation is completed within 30 secs starting from taking the plaque out of the freezer.

After the falling impact, the plaque was checked visually whether a crack is present on its surface. 9 plaques were tested for each formulation and a non-crack percentage is calculated.

**Table 2 Formulation and properties of the polymer compositions**

| | | CE1 | CE2 | CE3 | IE1 | IE2 | IE3 | IE4 |
|---|---|---|---|---|---|---|---|---|
| PP | wt% | 76.85 | 72.85 | 72.85 | 72.85 | 62.85 | 62.85 | 62.85 |
| GF | wt% | 20 | 20 | 20 | 20 | 20 | 20 | 20 |
| Additives | wt% | 1.4 | 1.4 | 1.4 | 1.4 | 1.4 | 1.4 | 1.4 |
| IA | wt% | 1.75 | 1.75 | 1.75 | 1.75 | 1.75 | 1.75 | 1.75 |
| TiO2 | wt% | | 4 | | | | | |
| ZnS | wt% | | | 4 | | | | |
| Lithopone | wt% | | | | 4 | 4 | 4 | 4 |
| POE 1 | wt% | | | | | 10 | | |
| POE 2 | wt% | | | | | | 10 | |
| POE 3 | wt% | | | | | | | 10 |
| Flexural modulus | MPa | 4287 | 3999 | 4210 | 4205 | 3702 | 3229 | 3493 |
| L value | - | 74.3 | 80.6 | 80.6 | 80.5 | 80.5 | 80.5 | 80.5 |
| Izod notched, 23°C | kJ/m2 | 18.7 | 7.4 | 11.4 | 13.6 | 16.5 | 18.1 | 16.9 |
| Izod notched, -40°C | kJ/m2 | 17 | 6.4 | 8.7 | 12.8 | - | - | - |
| Preservation of impact resistance at 23°C | | - | 0.41 | 0.61 | 0.73 | 0.88 | 0.96 | 0.90 |
| Preservation of impact resistance at - 40°C | | - | 0.38 | 0.51 | 0.75 | - | - | - |
| Falling weight impact resistance | Non crack% | 0 | 0 | 0 | 0 | 0 | 33.3 | 100 |

According to Table 2 CE1-CE3 and IE1, TiO₂, ZnS and ZnS^{·} BaSO₄ provide similar level of whiteness when comparing to reference CE2 but these white pigments lead to different level of preservation of impact resistance, wherein IE 1 comprising ZnS^{·} BaSO₄ has the highest preservation values which are higher than 0.70 at both 23°C and -40°C.

In Table 2 IE2 - IE4, IE 4 represents the most preferred embodiment since the POE 3 in IE4 has an MFI and a density in the preferred range, IE4 shows a better falling weight impact resistance than IE 2 and IE3.

## Claims

1. A polymer composition comprising polypropylene, glass fiber and a pigment comprising an inorganic zinc salt and an inorganic barium salt, wherein the MFI of the polypropylene is in the range from 17 to 75 dg/min, as measured according to ISO1133 at 230°C/2.16kg, wherein the xylene soluble part of the polypropylene is in the range from 9.3 to 19.6 wt% as measured according to by ISO16152:2005, wherein the amount of the polypropylene is in the range from 29.6 to 79.8 wt% based on the total amount of the polymer composition, wherein the amount of the glass fiber is in the range from 17 to 34 wt% based on the total amount of the polymer composition.

2. The polymer composition according to claim 1, wherein the molar ratio between the inorganic zinc salt and the inorganic barium salt is in the range from 0.3 to 1.7, more preferably in the range from 0.5 to 1.5, even more preferably in the range from 0.8 to 1.2.

3. The polymer composition according to any one of the previous claims, wherein the total amount of the inorganic zinc salt and the inorganic barium salt is in the range from 1.3 to 6.2 wt%, more preferably in the range from 1.8 to 5.4 wt%, even more preferably in the range from 2.3 to 4.8 wt% based on the total amount of the polymer composition.

4. The polymer composition according to any one of the previous claims, wherein the inorganic zinc salt is selected from a group consisting of zinc sulfide, zinc oxide and a mixture thereof, preferably the inorganic zinc salt is zinc sulfide.

5. The polymer composition according to any one of the previous claims, wherein the inorganic barium salt is selected from a group consisting of barium carbonate, barium sulfate, barium chloride and a mixture thereof, preferably the inorganic barium salt is barium sulfate.

6. The polymer composition according to any one of the previous claims, wherein the MFI of the polypropylene is in the range from 20 to 60 dg/min, preferably in the range from 25 to 55 dg/min, even more preferably in the range from 28 to 40 dg/min as measured according to ISO1133 at 230°C/2.16kg.

7. The polymer composition according to any one of the previous claims, wherein the xylene soluble part of the polypropylene is in the range from 11.2 to 18.4 wt%, preferably in the range from 12.4 to 17.4 wt% as measured according to by ISO16152:2005.

8. The polymer composition according to any one of the previous claims, wherein the intrinsic viscosity of the xylene soluble part of the polypropylene is in the range from 1.2 to 4.6 dl/g, preferably in the range from 1.8 to 4.0 dl/g, even more preferably in the range from 2.3 to 3.5 dl/g as measured according to ISO1628-1:2009 in decalin at 135 °C.

9. The polymer composition according to any one of the previous claims, wherein the polymer composition further comprises a polyolefin based elastomer, wherein the polyolefin based elastomer is an ethylene-1-octene copolymer.

10. The polymer composition according to claim 9, wherein the shore A hardness of the polyolefin based elastomer is in the range from 35 to 90, preferably in the range from 42 to 69, more preferably in the range from 47 to 60 as measured according to ASTM D2240-15, 1s.

11. The polymer composition according to any one of claims 9 and 10, wherein the density of the polyolefin based elastomer is in the range from 0.845 to 0.883 g/cm3, preferably in the range from 0.848 to 0.865 g/cm3, more preferably in the range from 0.853 to 0.860 g/cm3 as measured according to ASTM D792-13.

12. The polymer composition according to any one of claims 9 to 11, wherein the total amount of the polypropylene and glass fiber is at least 81 wt%, more preferably at least 87 wt%, more preferably at least 91 wt% based on the total amount of the polymer composition.

13. Process for the preparation of an article comprising the following sequential steps:
- Providing the polymer composition of any one of claims 1 to 12 in pellet form.
- Injection molding the polymer composition into an article.

14. An article comprising at least 90 wt%, preferably at least 95 wt%, more preferably at least 97 wt% of the polymer composition of any one of claims 1 to 12 based on the total amount of the article, preferably wherein the article is an antenna housing.

15. Use of the polymer composition of any one of claims 1 to 12 in an article, preferably wherein the article is an antenna housing.

## Patentansprüche

1. Polymerzusammensetzung, umfassend Polypropylen, Glasfaser und ein Pigment, das ein anorganisches Zinksalz und ein anorganisches Bariumsalz umfasst, wobei der MFI des Polypropylens im Bereich von 17 bis 75 dg/min liegt, gemessen nach IS01133 bei 230 °C/2,16 kg, wobei der in Xylol lösliche Teil des Polypropylens im Bereich von 9,3 bis 19,6 Gew.-% liegt, gemessen nach IS016152:2005, wobei die Menge des Polypropylens im Bereich von 29,6 bis 79,8 Gew.-%, bezogen auf die Gesamtmenge der Polymerzusammensetzung, liegt, wobei die Menge der Glasfaser im Bereich von 17 bis 34 Gew.-%, bezogen auf die Gesamtmenge der Polymerzusammensetzung, liegt.

2. Polymerzusammensetzung nach Anspruch 1, wobei das Molverhältnis zwischen dem anorganischen Zinksalz und dem anorganischen Bariumsalz im Bereich von 0,3 bis 1,7, bevorzugter im Bereich von 0,5 bis 1,5, noch bevorzugter im Bereich von 0,8 bis 1,2 liegt.

3. Polymerzusammensetzung nach einem der vorstehenden Ansprüche, wobei die Gesamtmenge des anorganischen Zinksalzes und des anorganischen Bariumsalzes im Bereich von 1,3 bis 6,2 Gew.-%, bevorzugter im Bereich von 1,8 bis 5,4 Gew.-%, noch bevorzugter im Bereich von 2,3 bis 4,8 Gew.-%, bezogen auf die Gesamtmenge der Polymerzusammensetzung, liegt.

4. Polymerzusammensetzung nach einem der vorstehenden Ansprüche, wobei das anorganische Zinksalz aus einer Gruppe ausgewählt ist, die aus Zinksulfid, Zinkoxid und einer Mischung davon besteht, wobei das anorganische Zinksalz bevorzugt Zinksulfid ist.

5. Polymerzusammensetzung nach einem der vorstehenden Ansprüche, wobei das anorganische Bariumsalz aus einer Gruppe ausgewählt ist, die aus Bariumcarbonat, Bariumsulfat, Bariumchlorid und einer Mischung davon besteht, wobei das anorganische Bariumsalz bevorzugt Bariumsulfat ist.

6. Polymerzusammensetzung nach einem der vorstehenden Ansprüche, wobei der MFI des Polypropylens im Bereich von 20 bis 60 dg/min, bevorzugt im Bereich von 25 bis 55 dg/min, noch bevorzugter im Bereich von 28 bis 40 dg/min, gemessen nach ISO1133 bei 230 °C/2,16 kg, liegt.

7. Polymerzusammensetzung nach einem der vorstehenden Ansprüche, wobei der in Xylol lösliche Teil des Polypropylens im Bereich von 11,2 bis 18,4 Gew.-%, bevorzugt im Bereich von 12,4 bis 17,4 Gew.-%, gemessen nach IS016152:2005, liegt.

8. Polymerzusammensetzung nach einem der vorstehenden Ansprüche, wobei die intrinsische Viskosität des in Xylol löslichen Teils des Polypropylens im Bereich von 1,2 bis 4,6 dl/g, bevorzugt im Bereich von 1,8 bis 4,0 dl/g, noch bevorzugter im Bereich von 2,3 bis 3,5 dl/g, gemessen nach IS01628-1:2009 in Decalin bei 135 °C, liegt.

9. Polymerzusammensetzung nach einem der vorstehenden Ansprüche, wobei die Polymerzusammensetzung weiter ein Elastomer auf Polyolefinbasis umfasst, wobei das Elastomer auf Polyolefinbasis ein Ethylen-1-Octen-Copolymer ist.

10. Polymerzusammensetzung nach Anspruch 9, wobei die Shore-A-Härte des Elastomers auf Polyolefinbasis im Bereich von 35 bis 90, bevorzugt im Bereich von 42 bis 69, bevorzugter im Bereich von 47 bis 60, gemessen nach ASTM D2240-15, 1s, liegt.

11. Polymerzusammensetzung nach einem der Ansprüche 9 und 10, wobei die Dichte des Elastomers auf Polyolefinbasis im Bereich von 0,845 bis 0,883 g/cm3, bevorzugt im Bereich von 0,848 bis 0,865 g/cm3, bevorzugter im Bereich von 0,853 bis 0,860 g/cm3, gemessen nach ASTM D792-13, liegt.

12. Polymerzusammensetzung nach einem der Ansprüche 9 bis 11, wobei die Gesamtmenge des Polypropylens und der Glasfaser mindestens 81 Gew.-%, bevorzugter mindestens 87 Gew.-%, bevorzugter mindestens 91 Gew.-%, bezogen auf die Gesamtmenge der Polymerzusammensetzung, beträgt.

13. Prozess zur Herstellung eines Gegenstands, der die folgenden aufeinanderfolgenden Schritte umfasst:
- Bereitstellen der Polymerzusammensetzung nach einem der Ansprüche 1 bis 12 in Pelletform.
- Spritzgießen der Polymerzusammensetzung in einen Gegenstand.

14. Gegenstand, umfassend mindestens 90 Gew.-%, bevorzugt mindestens 95 Gew.-%, bevorzugter mindestens 97 Gew.-% der Polymerzusammensetzung nach einem der Ansprüche 1 bis 12, bezogen auf die Gesamtmenge des Gegenstands, wobei der Gegenstand bevorzugt ein Antennengehäuse ist.

15. Verwendung der Polymerzusammensetzung nach einem der Ansprüche 1 bis 12 in einem Gegenstand, wobei der Gegenstand bevorzugt ein Antennengehäuse ist.

## Revendications

1. Composition polymère comprenant du polypropylène, des fibres de verre et un pigment comprenant un sel de zinc inorganique et un sel de baryum inorganique, dans laquelle le MFI du polypropylène se trouve dans la plage de 17 à 75 dg/min, tel que mesuré selon ISO1133 à 230 °C/2,16 kg, dans laquelle la partie soluble dans le xylène du polypropylène se trouve dans la plage de 9,3 à 19,6 % en poids, telle que mesurée selon ISO16152:2005, dans laquelle la quantité de polypropylène se trouve dans la plage de 29,6 à 79,8 % en poids sur la base de la quantité totale de la composition polymère, dans laquelle la quantité de fibres de verre se trouve dans la plage de 17 à 34 % en poids sur la base de la quantité totale de la composition polymère.

2. Composition polymère selon la revendication 1, dans laquelle le rapport molaire entre le sel de zinc inorganique et le sel de baryum inorganique se trouve dans la plage de 0,3 à 1,7, plus préférentiellement dans la plage de 0,5 à 1,5, encore plus préférentiellement dans la plage de 0,8 à 1,2.

3. Composition polymère selon l'une quelconque des revendications précédentes, dans laquelle la quantité totale de sel de zinc inorganique et de sel de baryum inorganique se trouve dans la plage de 1,3 à 6,2 % en poids, plus préférentiellement dans la plage de 1,8 à 5,4 % en poids, encore plus préférentiellement dans la plage de 2,3 à 4,8 % en poids sur la base de la quantité totale de la composition polymère.

4. Composition polymère selon l'une quelconque des revendications précédentes, dans laquelle le sel de zinc inorganique est choisi dans un groupe consistant en le sulfure de zinc, l'oxyde de zinc et un mélange de ceux-ci, de préférence le sel de zinc inorganique est le sulfure de zinc.

5. Composition polymère selon l'une quelconque des revendications précédentes, dans laquelle le sel de baryum inorganique est choisi dans un groupe consistant en le carbonate de baryum, le sulfate de baryum, le chlorure de baryum et un mélange de ceux-ci, de préférence le sel de baryum inorganique est le sulfate de baryum.

6. Composition polymère selon l'une quelconque des revendications précédentes, dans laquelle le MFI du polypropylène se trouve dans la plage de 20 à 60 dg/min, de préférence dans la plage de 25 à 55 dg/min, encore plus préférentiellement dans la plage de 28 à 40 dg/min, tel que mesuré selon la norme ISO1133 à 230 °C/2,16 kg.

7. Composition polymère selon l'une quelconque des revendications précédentes, dans laquelle la partie soluble dans le xylène du polypropylène se trouve dans la plage de 11,2 à 18,4 % en poids, de préférence dans la plage de 12,4 à 17,4 % en poids telle que mesurée selon la norme ISO16152:2005.

8. Composition polymère selon l'une quelconque des revendications précédentes, dans laquelle la viscosité intrinsèque de la partie soluble dans le xylène du polypropylène se trouve dans la plage de 1,2 à 4,6 dl/g, de préférence dans la plage de 1,8 à 4,0 dl/g, encore plus préférentiellement dans la plage de 2,3 à 3,5 dl/g telle que mesurée selon la norme ISO1628-1:2009 dans la décaline à 135 °C.

9. Composition polymère selon l'une quelconque des revendications précédentes, dans laquelle la composition polymère comprend en outre un élastomère à base de polyoléfine, dans laquelle l'élastomère à base de polyoléfine est un copolymère d'éthylène-1-octène.

10. Composition polymère selon la revendication 9, dans laquelle la dureté Shore A de l'élastomère à base de polyoléfine se trouve dans la plage de 35 à 90, de préférence dans la plage de 42 à 69, plus préférentiellement dans la plage de 47 à 60 telle que mesurée selon la norme ASTM D2240-15, 1s.

11. Composition polymère selon l'une quelconque des revendications 9 et 10, dans laquelle la densité de l'élastomère à base de polyoléfine se trouve dans la plage de 0,845 à 0,883 g/cm3, de préférence dans la plage de 0,848 à 0,865 g/cm3, plus préférentiellement dans la plage de 0,853 à 0,860 g/cm3 telle que mesurée selon la norme ASTM D792-13.

12. Composition polymère selon l'une quelconque des revendications 9 à 11, dans laquelle la quantité totale de polypropylène et de fibres de verre est d'au moins 81 % en poids, plus préférentiellement d'au moins 87 % en poids, plus préférentiellement d'au moins 91 % en poids sur la base de la quantité totale de la composition polymère.

13. Processus de préparation d'un article comprenant les étapes séquentielles suivantes :
- la fourniture de la composition polymère selon l'une quelconque des revendications 1 à 12 sous forme de granulés,
- le moulage par injection de la composition polymère dans un article.

14. Article comprenant au moins 90 % en poids, de préférence au moins 95 % en poids, plus préférentiellement au moins 97 % en poids de la composition polymère selon l'une quelconque des revendications 1 à 12 sur la base de la quantité totale de l'article, dans lequel l'article est de préférence un boîtier d'antenne.

15. Utilisation de la composition polymère selon l'une quelconque des revendications 1 à 12, dans laquelle l'article est de préférence un boîtier d'antenne.
